# EUROPÄISCHE PATENTSCHRIFT

(11) **EP 2 498 002 B1**
(45) Veröffentlichungstag und Bekanntmachung des Hinweises auf die Patenterteilung: **11.05.2016**
(21) Anmeldenummer: 11157339.0
(22) Anmeldetag: 08.03.2011
(51) Int. Cl.: F23C 7/06, F23D 14/66, F23L 15/04, F23M 5/00

(54) **Industriebrenner mit hohem Wirkungsgrad**
High efficiency industrial burner
Brûleur industriel à haute efficacité

(43) Veröffentlichungstag der Anmeldung: 12.09.2012
(73) Patentinhaber: Elster GmbH, 55252 Mainz-Kastel (DE)
(72) Erfinder: Gitzinger, Heinz-Peter, Dr., 41469 Neuss (DE)
(74) Vertreter: Zenz Patentanwälte Partnerschaft mbB

(56) Entgegenhaltungen:
- EP-A1- 0 324 043
- DE-A1- 3 422 229
- DE-A1-102005 038 110
- US-A1- 2008 145 297

## Beschreibung

Die Erfindung richtet sich auf einen Industriebrenner einer Thermoprozessanlage zur direkten oder indirekten Beheizung eines Ofenraumes, der eine Brennkammer mit wenigstens einer in einen Heizraum mündenden Öffnung, durch die ein Stoffstrom aus der Brennkammer in den Heizraum gelangt, und zumindest eine Wärmetauschvorrichtung aufweist, die aus dem Heizraum in die Wärmetauschvorrichtung gefördertes Abgas durch Wärmeaustausch mit Brennluft abkühlt, wobei die zumindest eine Wärmetauschvorrichtung sich in Axialrichtung zumindest teilweise entlang der Brennkammer erstreckt.

In vielen technischen Anwendungen, wie zum Beispiel im Bereich der Industrieöfen, bedarf es der Wärmeübertragung an ein zu behandelndes Gut. Die direkte oder indirekte Beheizung der Ofenanlage erfolgt dabei beispielsweise durch eine Vielzahl von Brennern bzw. Industriebrennern, die in der Wandung der Thermoprozessanlage bzw. Ofenanlage angeordnet sind und zur Beheizung des Ofeninnenraumes der Anlage dienen. Industriebrenner von diesem Typ für Industrieöfen, die den Ofeninnenraum direkt oder auch indirekt beheizen, sind hinlänglich bekannt und können für Öfen verwendet werden, in welche ein mit Wärme zu behandelndes Gut für eine bestimmte Zeitdauer eingebracht wird oder kontinuierlich von einem Ofeneingang zu einem entfernt zu diesem angeordneten Ofenausgang bewegt wird.

Bei Thermoprozessanlagen der Eisen- und Stahlindustrie wird die aufzubringende Energie überwiegend zur Erzeugung hoher Temperaturen benötigt. Dabei kann der hohe Energiebedarf durch entsprechende Maßnahmen deutlich gesenkt werden. Eine Maßnahme ist zum Beispiel die Nutzung der Wärme der Verbrennungsabgase bzw. Abgase zur Vorwärmung der Brennluft. In vielen Prozessen werden hierfür Brenner mit integrierter Wärmetauschvorrichtung, d.h. mit einem in dem Brenner integrierten Rekuperator oder einem in dem Brenner integrierten Regenerator, eingesetzt. Durch einen Wärmeaustausch zwischen der zugeführten Brennluft und dem Abgas des Industriebrenners wird der Wirkungsgrad erhöht.

Für die Umwandlung von Brennstoffenergie in Wärme werden sogenannte Impuls- oder Hochgeschwindigkeitsbrenner eingesetzt. Der Brennstoff und zumindest ein erster Teil der Brennluft werden in einer meist aus keramischem Material hergestellten hochhitzebeständigen Brennkammer miteinander vermischt und gezündet.

Ein Industriebrenner der eingangs genannten Art ist beispielsweise aus der DE 10 2005 038 110 A1 bekannt. Bei diesem Industriebrenner bilden die Auslässe des Brennerkopfes einen Düsenkranz, wobei die Achsen der Düsenöffnungen zueinander parallel, konvergierend oder voneinander divergierend ausgerichtet sein können. Die mechanische Energie des aus der Brennkammer austretenden Flammenstrahls und der ggf. aus separaten Düsen austretenden restliche Teil der Brennluft, dienen zur Vermischung und Umwälzung der Abgase im Heizraum, was wiederum den Temperaturausgleich in gewünschter Weise fördert. Dieser bekannte Industriebrenner ist mit einem Rekuperator ausgestattet, wobei durch den Wärmeaustausch zwischen der zugeführten Brennluft und dem Abgasstrom des Brenners der Wirkungsgrad erhöht wird. Hierzu dient der Rekuperator, der zwischen dem abgeführten Abgas und der zugeführten Brennluft einen Wärmeaustausch vornimmt.

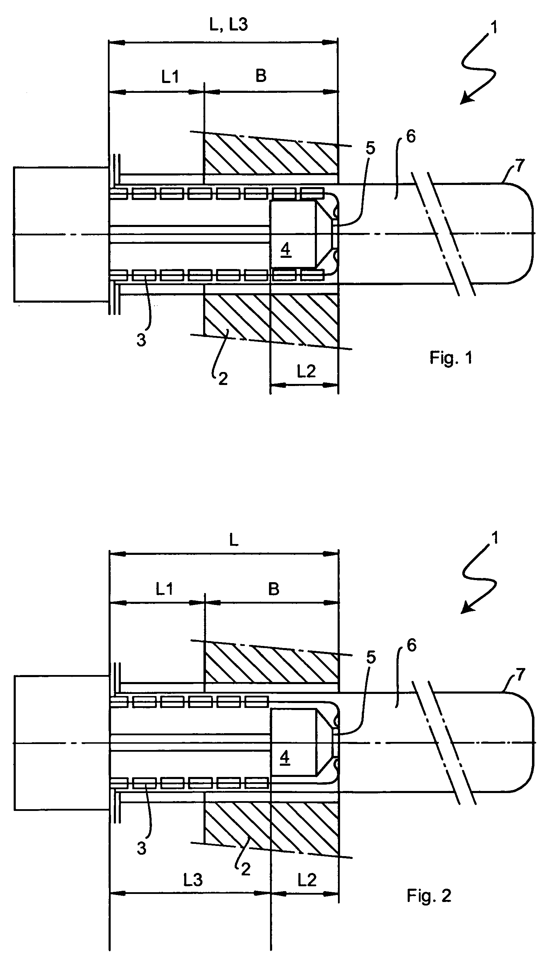

Bei Industriebrennern mit Vorwärmung der Brennluft, d.h. bei Brennern mit Rekuperator oder Regenerator, stellt der für den Einbau erforderliche Platzbedarf an der Ofenanlage bzw. Thermoprozessanlage eine begrenzende Randbedingung dar. Dabei ist zu berücksichtigen, dass der Durchmesser des Industriebrenners begrenzt ist, da allzu große Öffnungen in der Ofenwand im Hinblick auf den Anlagenwirkungsgrad nachteilig sind. Auch sind der Baulänge des Industriebrenners Grenzen gesetzt. Schematisch ist in Figur 1 ein Industriebrenner 1 mit einer als Rekuperator 3 mit einer axialen Gesamtlänge L3 ausgebildeten Wärmetauschvorrichtung dargestellt. Als Baulänge L wird bei Brennern oft die relevante Einbaulänge, also der Abstand zwischen Ofenflansch und Ofeninnenwand bezeichnet. Für die Gesamtlänge des Brenners ist zur Baulänge L noch die Gehäuselänge zu addieren. Das Gehäuse ist für die Zu- und Abführung von Gas, Luft und Abgas vorgesehen und in der Regel nicht nennenswert für den Wärmetausch nutzbar. Daher ist in Figur 1 die Gehäuselänge nicht für die Länge L3 berücksichtigt.

Der in der Ofenwand eingebaute Industriebrenner ragt auf der dem Heizraum gegenüberliegenden Seite der Ofenwand soweit aus dieser mit einem Überstand L1 hervor, wie die Brennerlänge L die Ofenwandbreite B übersteigt. Zu weit aus der Ofenwand herausragende Brenner kosten den Ofenbetreiber entsprechend viel Platz in der Halle und sind daher unerwünscht.

Aus den vorstehenden Ausführungen folgt, dass der Raum, der für die im Industriebrenner integrierte Wärmetauschvorrichtung zur Verfügung steht, im Wesentlichen durch die gewünscht gering zu haltende Baulänge und dem Brennerdurchmesser vorgegeben ist.

Bei dem in Figur 1 gezeigten Industriebrenner 1, der in einer Ofenwand 2 einer Thermoprozessanlage eingebaut ist und der mit der als Rekuperator 3 ausgebildeten Wärmetauschvorrichtung ausgestattet ist, gelangt das in einer Brennkammer 4 gebildete Abgas aus einer düsenförmigen Öffnung 5 und strömt in einen Heizraum 6, der in Figur 1 beispielhaft als Strahlheizrohr 7 ausgebildet ist. Von dem Heizraum 6 wird das heiße Abgas dann über die Wärmetauschvorrichtung bzw. den Rekuperator 3 aus dem Heizraum 6 abgeführt. Bei der Durchströmung der Wärmetauschvorrichtung gibt das heiße Abgas Wärme an den Rekuperator 3 ab. Die auf der radialen Innenseite des Rekuperators 3 in zur Abgasströmung entgegen gesetzter Richtung strömende Brennluft nimmt die Wärme vom Rekuperator 3 auf und kühlt dadurch das durch den Rekuperator 3 strömende Abgas.

Hierbei ist zu berücksichtigen, dass der Wirkungsgrad der Wärmetauschvorrichtung und damit auch der Wirkungsgrad des Ofens im Wesentlichen von der erreichbaren Kühlung der Ofenabgase bzw. des Abgases an der Wärmetauschvorrichtung bzw. des Rekuperators 3 des Industriebrenners 1 abhängig sind.

Im Hinblick auf den Wirkungsgrad des Industriebrenners sowie der Ofenanlage ist allerdings die bauliche Anordnung der Wärmetauschvorrichtung innerhalb des Brenners von besonderer Bedeutung. Die bei bekannten Industriebrennern mit Rekuperator oder Regenerator meist internen bzw. im Brenner selbst ausgebildeten Brennkammern sind in der Regel konzentrisch radial innerhalb der Wärmetauschvorrichtung angeordnet. Die Figur 1 zeigt eine solche Anordnung, bei welcher die Brennkammer 4 in Axialrichtung von der als Rekuperator 3 ausgebildeten Wärmetauschvorrichtung radial umgeben ist. Dabei umgibt der Rekuperator 3 die Brennkammer 4 über ihre gesamte axiale Brennkammerlänge L2, wobei L3 die axiale Gesamtlänge des Rekuperators 3 ist und im Wesentlichen die gleiche Länge wie die Brennerlänge L des Industriebrenners 1 aufweist. Bei dieser Bauart mit innerhalb der Wärmetauschvorrichtung bzw. des Rekuperators 3 liegender Brennkammer 4 wird aufgrund der in der Brennkammer 4 erfolgenden Verbrennung hauptsächlich über Strahlung auch Wärme von der sehr heißen Brennkammer 4 an ein in Figur 1 nicht näher dargestelltes Luftführungsrohr, welches radial von dem Rekuperator 3 umgeben ist und von dem Brennluft zur Brennkammer 4 geführt wird, und zusätzlich an den Rekuperator 3 hauptsächlich im Bereich der Brennkammerlänge L2 übertragen.

Diese unerwünschte Wärmeübertragung sorgt für eine Aufheizung des Luftführungsrohres, der durch den zwischen Luftführungsrohr und Rekuperator 3 gebildeten Ringraum strömenden Brennluft und der Wärmetauschvorrichtung, wodurch das Vermögen des Rekuperators 3 sinkt, das Abgas wirkungsvoll zu kühlen. Dadurch wird der Wirkungsgrad des Rekuperators 3 - hauptsächlich im Bereich der Brennkammerlänge L2 - und damit auch der Wirkungsgrad der Ofenanlage vermindert.

Das vorstehend beschriebene Problem einer unerwünschten Aufheizung durch Wärme der Brennkammer ist nicht nur auf Industriebrenner mit Rekuperator beschränkt. Beispielhaft sei die DE 44 20 477 C2 genannt, in welcher ein Industriebrenner mit einer als Regenerator ausgeführten Wärmetauschvorrichtung beschrieben ist. Der Brenner weist austauschbare und den Regenerator bildende Regeneratorelemente auf, die die Brennkammer radial umgeben bzw. um diese herum angeordnet sind. Auch bei dieser Bauart werden die in Nähe der Brennkammer angeordneten Regeneratorelemente im Betrieb des Brenners durch Wärmeeinstrahlung bzw. durch die Wärme der Brennkammer in unerwünschter Weise beheizt, was die Abkühlung des Abgases verschlechtert.

Eine Möglichkeit zur Vermeidung des beschriebenen Problems der unerwünschten Beheizung der Wärmetauschvorrichtung besteht darin, auf die Nutzung des Bereichs um die innerhalb des Industriebrenners 1 angeordnete Brennkammer 4 für die Wärmetauschvorrichtung bzw. den Rekuperator 3 zu verzichten, wie exemplarisch in Figur 2 dargestellt ist. Mit anderen Worten verringert sich im Vergleich zu der in Figur 1 dargestellten Ausführungsform die axiale Länge L3 des Rekuperators 3 um die axiale Brennkammerlänge L2. Damit verkürzt sich ferner der für die Wärmetauschvorrichtung nutzbare Bereich in Form der Gesamtlänge L des Industriebrenners 1 um die Brennkammerlänge L2, wie aus Figur 2 ersichtlich ist. Ein solcher Industriebrenner mit einer als Rekuperator ausgebildeten und axial vor der Brennkammer endenden Wärmetauschvorrichtung ist beispielsweise aus der DE 34 22 229 A1 bekannt. Bei diesem Brenner ist um die innerhalb des Brenners integrierte Brennkammer herum eine Restluftkammer vorgesehen, die zwar als Verlängerung des rohrförmigen Rekuperators ausgeführt ist, die aber hauptsächlich zur Führung von Restluft, also Luft, die nicht am Verbrennungsprozess in der Brennkammer beteiligt ist, dient. Eine Beheizung der Restluft durch die heiße Brennkammer wird hierbei nicht gezielt vermieden. Vielmehr kann durch die Restluft eine Kühlung der Brennkammerwand erwünscht sein. Durch den bei diesem bekannten Brenner im Vergleich zum Rekuperatorrohr verminderten Außendurchmesser der Restluftkammer, den dadurch vergrößerten Strömungsquerschnitts für das außerhalb der Restluftkammer strömende und den Heizraum verlassende heiße Abgas wird offensichtlich, dass eine Abkühlung der Abgase im Bereich der Restluftkammer und damit im Bereich der Brennkammer nicht angestrebt wird. Es wird demnach bewusst für den Bereich L2 um die Brennkammer herum auf einen Wärmeaustausch zwischen dem Abgas und der Brennluft verzichtet.

Der Erfindung liegt die Aufgabe zugrunde, bei einem Industriebrenner der eingangs bezeichneten Art eine Lösung zu schaffen, die auf konstruktiv einfache Weise und kostengünstig eine effektive Ausnutzung der in dem Abgas enthaltenen Wärmeenergie des Abgases ermöglicht und den Wärmeeinfluss der Brennkammer im Hinblick auf eine Abkühlung des Abgases auf ein Mindestmaß reduziert.

Bei einem Industriebrenner einer Thermoprozessanlage zur direkten oder indirekten Beheizung eines Heizraumes der eingangs bezeichneten Art wird diese Aufgabe erfindungsgemäß dadurch gelöst, dass eine Wärmedämmung zwischen der Brennkammer und der zumindest einen Wärmetauschvorrichtung angeordnet ist, wobei die Wandstärke der Wärmedämmung mindestens 3 mm beträgt und die Wärmedämmung ein Material mit einer Wärmeleitfähigkeit von weniger als 5 W/(m·K) aufweist.

Vorteilhafte und zweckmäßige Ausgestaltungen und Weiterbildungen der Erfindung ergeben sich aus den Unteransprüchen.

Durch die Erfindung wird eine Möglichkeit bereitgestellt, mit welcher auf konstruktiv einfache Weise und kostengünstig der Wirkungsgrad eines Industriebrenners mit einer im Brenner integrierten Wärmetauschvorrichtung zur Vorwärmung von Brennluft bzw. zur Abkühlung von Abgas erhöht wird. Insbesondere weist ein Industriebrenner gemäß der Erfindung eine integrierte Wärmetauschvorrichtung auf, die als Rekuperator oder als Regenerator ausgeführt sein kann. Die Wärmetauschvorrichtung dient zur Abkühlung der den Heizraum verlassenden Abgase durch Brenner-interne Vorwärmung der Brennluft. Dabei wird der Wirkungsgrad der Wärmetauschvorrichtung erfindungsgemäß durch eine Maximierung der Baulänge der Wärmetauschvorrichtung bis hin zu dem Bereich der Öffnung der Brennkammer und damit durch Maximierung der Wärmetauschfläche erhöht. Dadurch, dass wenigstens in dem Bereich zwischen der Brennkammer und der zumindest einen Wärmetauschvorrichtung eine Wärmedämmung angeordnet ist, wird weitestgehend verhindert, dass Wärme der Brennkammer an dem Wärmetauschprozess zwischen dem Abgas und der Brennluft teilnimmt. Somit wird erfindungsgemäß die unerwünschte Beheizung der Wärmetauschvorrichtung durch die nahe im Bereich der Wärmetauschvorrichtung angeordnete und im Industriebrenner integrierte Brennkammer durch ein wärmedämmendes Bauteil minimiert, welches zwischen der Brennkammer und dem Wärmetauscher angeordnet ist. Erfindungsgemäß wird somit ein Industriebrenner mit integrierter Luftvorwärmung durch Abkühlung von Abgas mit hohem Wirkungsgrad bereitgestellt, der eine großflächige bzw. großvolumige Wärmetauschvorrichtung umfasst, wobei eine unerwünschte Beheizung der Wärmetauschvorrichtung dadurch vermieden wird, dass die Brenner-interne Brennkammer von einer Wärmedämmung umgeben ist.

Die Erfindung ist auch auf Industriebrenner für flammenlosen Betrieb anwendbar. Der flammenlose Betrieb ist in der Regel nur oberhalb einer Mindesttemperatur im Heizraum durchführbar. Daher verfügen Industriebrenner für flammenlosen Betrieb meist über die Möglichkeit, bei zu kaltem Heizraum in einer ersten Betriebsart mit Flamme betrieben werden zu können. Bei solchen Industriebrennern dient meist eine dazu im Brenner integrierte bzw. Brenner-interne Brennkammer in der ersten Betriebsart zur Stabilisierung einer Flamme und in der zweiten, sogenannten flammenlosen Betriebsart lediglich zur Weiterleitung von Brenngas und/oder Brennluft in den Heizraum. Dennoch können auch in der zweiten Betriebsphase Teilreaktionen von Brennstoff und Brennluft in der Brennkammer stattfinden, wenn auch ohne sichtbare Flammenbildung. Bei Industriebrennern für flammenlosen Betrieb wirkt sich der Vorteil der Erfindung hauptsächlich während der beschriebenen ersten Betriebsphase mit Flamme in der Brennkammer aus.

Eine besonders gute Wärmedämmung lässt sich in Ausgestaltung des erfindungsgemäßen Industriebrenners dadurch erzielen, dass die Wärmedämmung ein Material mit einer Wärmeleitfähigkeit von weniger als 0,6 W/(m·K) aufweist.

In Ausgestaltung des Industriebrenners sieht die Erfindung weiter vor, dass die Wärmedämmung aus vakuumgeformten Keramikfaserbauteilen bestehen kann. Bei diesem Werkstoff handelt es sich um Fasern aus anorganischem, nicht-metallischem Material, welches eine hohe Festigkeit aufweist und darüber hinaus die erwünschte Wärmedämmung unterstützt. Dieser Werkstoff ist bei mechanischer Belastung nachgiebig, wodurch die Fertigungstoleranzen für einen maßgenauen Einbau verkleinert werden können und ein sehr enger Spalt zur Führung der Sekundärluft über die Wärmetauschvorrichtung und zur Erhöhung des Wirkungsgrades einstellbar ist.

In weiterer Ausgestaltung des erfindungsgemäßen Industriebrenners ist vorgesehen, dass die zumindest eine Wärmetauschvorrichtung als die Brennkammer radial umgebender Rekuperator ausgebildet ist, wobei ein Abgasführungsrohr den Rekuperator radial umgibt und zwischen dem Abgasführungsrohr und dem Rekuperator ein mit dem Heizraum in Strömungsverbindung stehender Abgaskanal gebildet ist, wobei ferner in axialer Richtung stromauf der Brennkammer ein von dem Rekuperator radial umgebendes Luftführungsrohr angeordnet ist, wobei zwischen dem Luftführungsrohr und dem Rekuperator ein Brennluft führender Brennluftkanal gebildet ist. Im Hinblick auf einen schadstoffarmen Betrieb des Industriebrenners ist in weiterer Ausgestaltung vorgesehen, dass stromauf der Brennkammer am stromabseitigen Ende des Luftführungsrohres eine Strömungsverzweigung vorgesehen ist, die die in dem Brennluftkanal in Richtung der Brennkammer geförderte Brennluft zumindest in einen zu der Brennkammer führenden Primärluftkanal und in einen zwischen dem Rekuperator und der Wärmedämmung ausgebildeten, zu dem Kopf des Rekuperators führenden Sekundärluftkanal leitet. Dabei kann zumindest ein Teil der zum Kopf des Rekuperators geleiteten Brennluft als sogenannte sekundäre Brennluft an einem gestuften Verbrennungsprozess teilnehmen, bei dem das vorverbrannte Gemisch aus Brenngas und Brennluft, welches aus der Brennkammer austritt, mit der sekundären Brennluft nachverbrannt wird.

Um die Brennkammer ggf. vor Überhitzung zu schützen, sieht die Erfindung in Ausgestaltung des Industriebrenners die Möglichkeit vor, dass die Wärmedämmung unter Ausbildung eines Radialspalts zu der Brennkammer radial beabstandet angeordnet ist.

Der Radialspalt eröffnet dabei die Möglichkeit, dass ein Kühlluftstrom zwischen Wärmedämmung und Rekuperator geführt wird, der die Brennkammer kühlt. Hierzu ist in Ausgestaltung der Erfindung vorgesehen, dass der Radialspalt mit dem Primärluftkanal und dem Sekundärluftkanal derart in Strömungsverbindung steht, dass zur Kühlung der Wandung der Brennkammer ein Teil der durch den Primärluftkanal strömenden Brennluft durch den Radialspalt zu dem Sekundärluftkanal oder ein Teil der durch den Sekundärluftkanal strömenden Brennluft durch den Radialspalt zu dem Primärluftkanal strömt.

Besonders günstig ist es im Hinblick auf eine möglichst effiziente Ausgestaltung des Industriebrenners, wenn das stromauf der Brennkammer bis zur Strömungsverzweigung verlaufende Luftführungsrohr und die Wärmedämmung als ein einziges Bauteil aus einem Material mit einer Wärmeleitfähigkeit von weniger als 5 W/(m·K) und mit einer Wandstärke von mindestens 3 mm ausgeführt sind, welches zur Ausbildung einer Strömungsverzweigung stromauf der Brennkammer Durchtrittsöffnungen aufweist. Hierbei übernimmt dann das Lüftungsrohr neben der eigentlichen Funktion der Führung der Brennluft zusätzlich die Aufgabe einer Wärmedämmung, so dass auch stromauf der Brennkammer sichergestellt ist, dass das Abgas nicht unerwünscht durch Wärmestrahlung der Brennkammer erwärmt wird. Dabei kann das so ausgestaltete und ausgebildete Luftführungsrohr und die Wärmedämmung im Bereich der Brennkammer ein Bauteil sein, welches Durchtrittsöffnungen aufweist, die die Strömungsverzweigung ausbilden.

Da stromab der Strömungsverzweigung in dem Ringspalt zwischen Rekuperator und Wärmedämmung nur noch ein Teil der Brennluft geführt wird, ist es zur Aufrechterhaltung einer in diesem Bereich konstanten oder hohen Strömungsgeschwindigkeit zweckmäßig, wenn der zwischen Rekuperator und Luftführungsrohr gebildete Brennluftkanal einen größeren Durchströmungsquerschnitt aufweist als der zwischen Rekuperator und Wärmedämmung gebildete Sekundärluftkanal.

Schließlich ist in einer alternativen Ausgestaltung des erfindungsgemäßen Industriebrenners vorgesehen, dass die Wärmetauschvorrichtung als Regenerator mit einem oder mehreren Regenerator-Elementen ausgebildet ist. Die Regenerator-Elemente sind radial um den Umfang der Brennkammer herum gleichmäßig beabstandet angeordnet, wobei die zwischen Brennkammer und Regenerator-Elementen angeordnete Wärmedämmung eine unerwünschte Erwärmung des die Regenerator-Elemente durchströmenden Abgases verhindert oder zumindest minimiert.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsbeispiele der Erfindung dargestellt sind. In der Zeichnung zeigt:
Figur 1 eine schematische Darstellung eines aus dem Stand der Technik bekannten Industriebrenners mit einer als Rekuperator ausgeführten Wärmetauschvorrichtung,
Figur 2 eine schematische Darstellung eines weiteren, aus dem Stand der Technik bekannten Industriebrenners mit einer als Rekuperator ausgeführten Wärmetauschvorrichtung,
Figur 3 einen Industriebrenner gemäß einer ersten Ausführungsform der Erfindung in Schnittansicht,
Figur 4 eine vergrößerte Teilansicht des in Figur 4 dargestellten Industriebrenners und
Figur 5 einen Industriebrenner gemäß einer zweiten Ausführungsform der Erfindung in Schnittansicht.

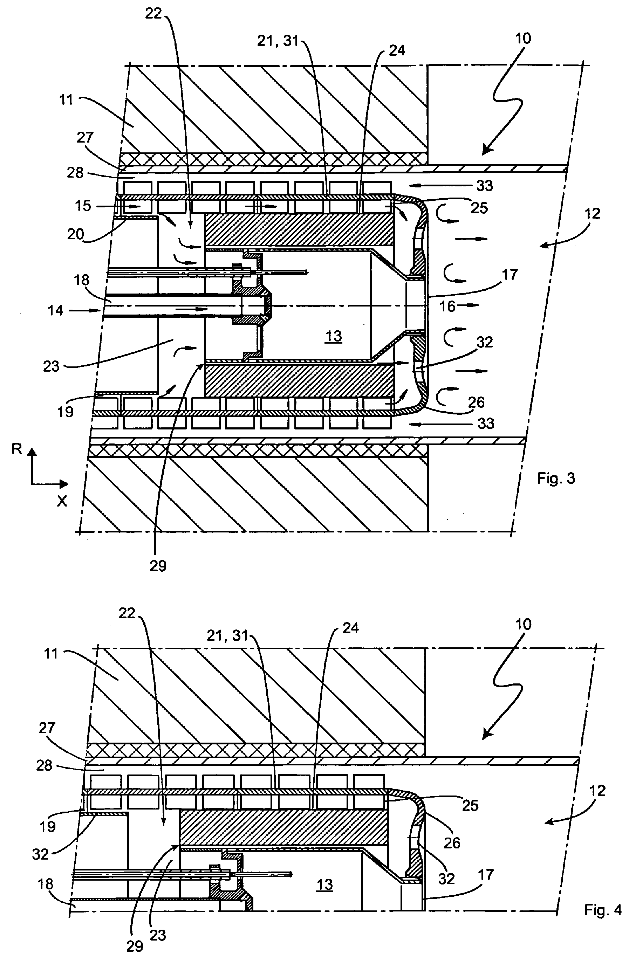

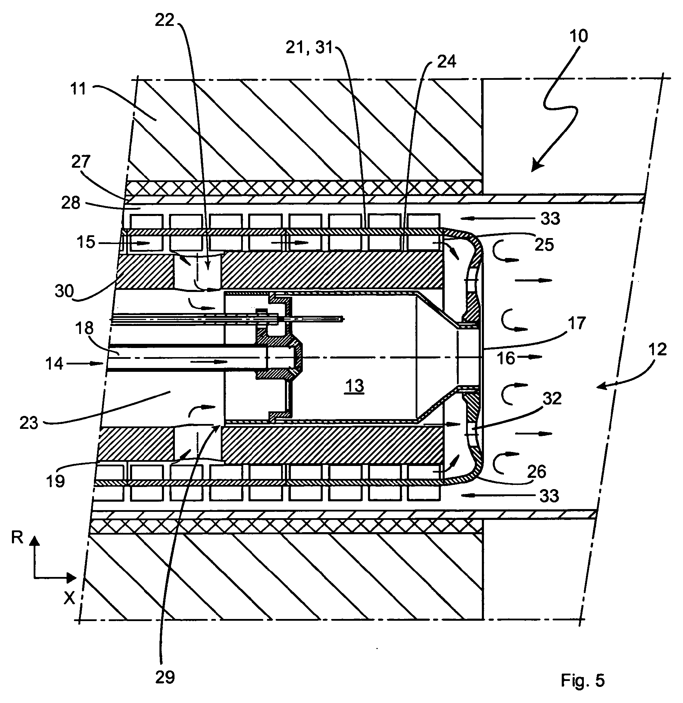

In den Figuren 3 bis 5 ist ein insgesamt mit 10 bezeichneter Industriebrenner beispielhaft in seiner Einbauposition in einer indirekt beheizten Thermoprozessanlage dargestellt. Die Figuren 3 und 4 zeigen eine erste Ausführungsform der Erfindung, wohingegen Figur 5 eine zweite Ausführungsform zeigt. Da beide Ausführungsformen überwiegende Gemeinsamkeiten aufweisen, richtet sich die nachstehende Beschreibung auch auf beide Ausführungsformen, um Wiederholungen zu vermeiden.

Der Industriebrenner 10 ist abschnittsweise in einer Ofenwand 11 der Thermoprozessanlage eingebaut und dient zur direkten oder indirekten Beheizung eines Heizraumes 12. Dabei ist der Heizraum 12 bei direkter Beheizung der Ofenraum selbst, wohingegen bei indirekter Beheizung der Heizraum 12 von einem in den Ofenraum hineinragenden Strahlheizrohr, wie es zum Beispiel in den Figuren 1 und 2 dargestellt ist, gebildet und begrenzt ist. Der Industriebrenner 10 weist ferner eine Brennkammer 13 auf, in die ein Gemisch aus Brennstoff 14 und Brennluft 15 gefördert wird. Aus der Brennkammer 13 tritt dann ein Stoffstrom 16 über eine Öffnung 17 aus der Brennkammer 13 in den Heizraum 12 aus, wobei die Brennkammer 13 bis zur Öffnung 17 eine düsenförmige Querschnittsverengung aufweist. Bei dem Stoffstrom 16 kann es sich um ein zumindest teilweise zu Abgas 33 verbranntes Brennstoff-Brennluft-Gemisch oder aber bei flammenloser Verbrennung um ein unverbranntes Brennstoff-Brennluft-Gemisch handeln. Der Brennstoff 14 wird über eine Brennstofflanze bzw. einen Brennstoffkanal 18 in die Brennkammer 13 gefördert, wohingegen die Brennluft 15 am beispielhaft dargestellten Rekuperatorbrenner über einen Brennluftkanal 19 in Richtung der Brennkammer 13 gefördert wird. Hierbei ist der die Brennluft 15 leitende und fördernde Brennluftkanal 19 zwischen einem Luftführungsrohr 20 und einer als Rekuperator 21 ausgeführten Wärmetauschvorrichtung 31 ausgebildet. Der in den Figuren 3 bis 5 dargestellte Rekuperator 21 weist zur Erhöhung des Wärmeaustausches Rippen auf, wobei auch andere Maßnahmen zur Erhöhung des Wärmeaustausches aus dem Stand der Technik bekannt sind. Am stromabseitigen Ende des Luftführungsrohres 20 ist eine Strömungsverzweigung 22 vorgesehen, die die in dem Brennluftkanal 19 geförderte Brennluft 15 aufteilt. Dabei wird ein Teil der Brennluft 15 durch einen zu der Brennkammer 13 führenden Primärluftkanal 23 geleitet, wohingegen ein anderer Teil der Brennluft 15 durch einen zwischen dem Rekuperator 21 und einer die Brennkammer 13 radial umgebenden Wärmedämmung 24 ausgebildeten Sekundärluftkanal 25 geleitet wird. Der Sekundärluftkanal 25 führt zu dem Kopf 26 des Rekuperators 21, an dem die vorgewärmte Brennluft 15 über Sekundärluftdüsen 32 in den Heizraum 12 tritt.

Die als Rekuperator 21 ausgeführte Wärmetauschvorrichtung 31 umgibt radial die Wärmedämmung 24 sowie die Brennkammer 13 und ist selbst von einem Abgasführungsrohr 27, welches, wie in Fig.3 dargestellt, bei indirekter Beheizung auch durch das Strahlrohr selbst gebildet werden kann, radial umgeben, wobei der zwischen dem Abgasführungsrohr 27 und dem Rekuperator 21 gebildete Ringraum ein Abgaskanal 28 ist, der von Abgas 33 aus dem Heizraum 12 durchströmt wird. Zu diesem Zweck steht der Abgaskanal 28 mit dem Heizraum 12 in Strömungsverbindung, wobei das Abgas 33 den Rekuperator 21 entgegen der Strömungsrichtung der Brennluft 15 durchströmt und bei Durchströmung seien Wärme an den Rekuperator 21 abgibt. Somit erfolgt mit Hilfe des Rekuperators 21 der Wärmeaustausch von dem Abgas 33 auf die Brennluft 15 nach dem Gegenstromprinzip, wodurch sich das Abgas bei Durchströmung des Rekuperators 21 abkühlt. Da für einen hohen Wirkungsgrad eine starke Abkühlung des Abgases 33 erforderlich ist, wird sich der Rekuperator 21 möglichst über die gesamte Axiallänge des Industriebrenners 10 erstrecken, wie es in Figur 1 dargestellt ist. Die Figuren 3 und 4 zeigen die als Rekuperator 21 ausgeführte Wärmetauschvorrichtung 31 lediglich schematisch, wobei sich die Wärmetauschvorrichtung 31 bzw. der Rekuperator 21 in Axialrichtung X im Wesentlichen über die gesamte Axiallänge des Industriebrenners 10 und insbesondere entlang der Brennkammer 13 und im Wesentlichen bis zu deren Öffnung 17 erstreckt.

Bei einem Betrieb des Industriebrenners 10 mit zumindest teilweiser Verbrennung von Brennstoff und Brennluft (oder einem anderen Oxidator) in der Brennkammer 13 heizt sich die Brennkammer 13 stark auf und gibt Wärme an die die Brennkammer 13 umgebenden Bauteile ab, wie beispielsweise den Rekuperator 21. Dies führt dazu, dass nicht nur die durch den Industriebrenner 10 geförderte Brennluft 15 erwärmt wird, sondern auch das aus dem Heizraum 12 abgeführte Abgas 33 erwärmt, bzw. weniger stark als möglich gekühlt wird. Damit der Abkühlung des Abgases 33 nicht die Wärme der Brennkammer 13 entgegenwirkt, ist erfindungsgemäß die Wärmedämmung 24 zwischen der Brennkammer 13 und dem Rekuperator 21 angeordnet. Dabei sollte die Wandstärke der Wärmedämmung 24 in Radialrichtung R mindestens 3 mm betragen und die Wärmedämmung 24 ein Material mit einer Wärmeleitfähigkeit von weniger als 5 W/(m·K), vorzugsweise weniger als 0,6 W/(m·K), aufweisen oder selbst aus einem solchen Material bestehen. Besonders von Vorteil ist es, wenn die Wärmedämmung 24 aus vakuumgeformten Keramikfasern besteht.

Optional und zusätzlich zur Wärmedämmung 24 kann die Brennkammer 13 auch von einem Luftstrom gekühlt werden. Hierzu ist erfindungsgemäß vorgesehen, dass die Wärmedämmung 24 unter Ausbildung eines Radialspalts 29 zu der Brennkammer 13 radial bzw. in Radialrichtung R beabstandet angeordnet ist. Ein Teil der durch den Primärluftkanal 23 strömenden Brennluft 15 kann hierbei zur Kühlung der Außenwand der Brennkammer 13 genutzt werden. Dabei kann die Brennluft 15 durch den Radialspalt 29 geleitet und am Kopf 26 des Rekuperators 21 der durch den Sekundärluftkanal 25 strömenden Brennluft 15 wieder zugeführt werden. In diesem Fall würde der Radialspalt 29 mit dem Primärluftkanal 23 und dem Sekundärluftkanal 25 derart in Strömungsverbindung stehen, dass zur Kühlung der Wandung der Brennkammer 13 ein Teil der durch den Primärluftkanal 23 strömenden Brennluft 15 durch den Radialspalt 29 zu dem Sekundärluftkanal 25 am Kopf 26 des Rekuperators 21 strömt. Denkbar ist aber auch, dass Brennluft 15, die bereits durch den Sekundärluftkanal 25 geströmt ist, erst am Kopf 26 des Rekuperators 21 in den Radialspalt 29 geleitet wird und der zur Brennkammer 13 strömenden Brennluft 15 zugeführt wird. Hierbei würde dann der Radialspalt 29 mit dem Primärluftkanal 23 und dem Sekundärluftkanal 25 derart in Strömungsverbindung stehen, dass zur Kühlung der Wandung der Brennkammer 13 ein Teil der durch den Sekundärluftkanal 25 strömenden Brennluft 15 durch den Radialspalt 29 zu dem Primärluftkanal 23 strömt.

Da im Bereich der Brennkammer 13 im Sekundärluftkanal 25 nur ein Teil der gesamten Brennluft 15 geführt wird, ist zur Erreichung einer annähernd gleichen oder hohen Strömungsgeschwindigkeit über die gesamte Baulänge des Rekuperators 21 ein verminderter Strömungsquerschnitt in diesem Bereich erforderlich. Dies kann durch einen in diesem Bereich vergrößerten Durchmesser der die Sekundärluft am Rekuperator führenden Wärmedämmung 24 oder durch einen verkleinerten Durchmesser des Rekuperators 21 erreicht werden. Daher ist es für eine konstante Strömungsgeschwindigkeit der Brennluft 15 über die gesamte Axiallänge des Rekuperators 21 erforderlich, dass der zwischen Rekuperator 21 und Luftführungsrohr 20 gebildete Brennluftkanal 19 einen größeren Durchströmungsquerschnitt aufweist als der zwischen Rekuperator 21 und Wärmedämmung 24 gebildete Sekundärluftkanal 25.

Die in den Figuren 3 und 4 dargestellte erste Ausführungsform des Industriebrenners 10 unterscheidet sich nur geringfügig von der in Figur 5 gezeigten Ausführungsform. Der in Figur 5 dargestellte Industriebrenner weist lediglich den Unterschied auf, dass das bis zur Strömungsverzweigung 22 verlaufende Luftführungsrohr 30 als Wärmedämmung ausgebildet ist und aus einem Material mit einer Wärmeleitfähigkeit von weniger als 5 W/(m·K) mit einer Wandstärke von mindestens 3 mm besteht. Demnach ist das Luftführungsrohr 30 ähnlich zu der Wärmedämmung 24 ausgeführt. Denkbar ist hierbei, dass die Wärmedämmung 24 und das Luftführungsrohr 30 ein einziges Bauteil sind, welches zur Ausbildung der Strömungsverzweigung 22 stromauf der Brennkammer 13 Durchtrittsöffnungen aufweist.

Die Erfindung zusammenfassend ist ein Industriebrenner 10 mit geringer NOx-Emission, insbesondere zur direkten oder indirekten Beheizung von Ofenräumen von Industrieöfen, beschrieben, der eine integrierte Wärmetauschvorrichtung 31 zur Abkühlung der den Heizraum 12 verlassenden Abgase 33 durch Brenner-interne Brennluftvorwärmung und eine Brenner-internen Brennkammer 13 umfasst. Die Brennkammer 13 ist mit wenigstens einer Mündung bzw. Öffnung 17 in den Heizraum 12 versehen, durch die im Betrieb ein Stoffstrom in den Heizraum 12 austritt. Der Wirkungsgrad der Wärmetauschvorrichtung 31 wird erhöht durch die Ausgestaltung der Wärmetauschvorrichtung 31 bis nahe an den Rand der Ofenwand 11 und durch ein wärmedämmendes Bauteil bzw. eine Wärmedämmung 24 zur Verminderung der Wärmeübertragung von der Brennkammer 13 auf die Wärmetauschvorrichtung 31.

Bei dem erfindungsgemäßen Industriebrenner 10 ist zwischen der Brennkammer 13 und der Wärmetauschvorrichtung 31 die Wärmedämmung 24 derart angeordnet, dass der Brennluftstrom zwischen Rekuperator 21 und Luftführungsrohr 20 nur bis vor die Brennkammer 13 geführt wird. An dieser Stelle im Industriebrenner 10 erfolgt dann mit Hilfe der Strömungsverzweigung 22 eine Aufteilung des Brennluftstroms in einen Primärbrennluftstrom (Brennluftstrom, der durch die Brennkammer 13 geführt wird und damit an der ersten Verbrennungsstufe teilnimmt), der direkt in die Brennkammer 13 geleitet wird und in diese eintritt, und in einen Sekundärbrennluftstrom (Brennluftstrom, der nicht durch die Brennkammer 13 geführt wird), der weiter über den Rekuperator 21 bis zu den Sekundärluftdüsen 31 geführt wird. Um eine Minderung der Abgaskühlung am Rekuperator 21 durch die Wärmeeinstrahlung der heißen Brenner-internen Brennkammer 13 weitgehend zu minimieren, ist eine Wärmedämmung 24 zwischen Brennkammer 13 und Rekuperator 21 vorgesehen. Diese Wärmedämmung 24 ist vorteilhaft aus einem Faserformbauteil herstellbar, wodurch ggf. die Einbautoleranzen zum Rekuperator 21 verkleinert werden können und ein enger Spalt zur Führung der Sekundärluft über den Rekuperator 21 und zur Erhöhung des Wirkungsgrades einstellbar ist.

Die vorstehend beschriebene Erfindung ist selbstverständlich nicht auf die beschriebenen und dargestellten Ausführungsformen beschränkt. Die Erfindung der die im Brenner integrierte Brennkammer 13 umgebenden Wärmedämmung 24 wurde exemplarisch am Beispiel eines Industriebrenners 10 mit Rekuperator 21 beschrieben.

Der Fachmann wird erkennen, dass sich die Merkmale auch auf einen Industriebrenner mit Regenerator übertragen lassen. Hierbei würde dann die Wärmedämmung zwischen der Brennkammer und einem oder mehreren Regenerator-Elementen des Regenerators angeordnet sein.

Ferner können an den in der Zeichnung dargestellten Ausführungsformen zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispielen für den Fachmann naheliegt.

## Patentansprüche

1. Industriebrenner einer Thermoprozessanlage zur direkten oder indirekten Beheizung eines Ofenraumes, der eine Brennkammer (13) mit wenigstens einer in einem Heizraum (12) mündenden Öffnung (17), durch die ein Stoffstrom (16) aus der Brennkammer (13) in den Heizraum (12) gelangt, und zumindest eine Wärmetauschvorrichtung (31) aufweist, die aus dem Heizraum (12) in die Wärmetauschvorrichtung (31) gefördertes Abgas (33) durch Wärmeaustausch mit Brennluft (15) abkühlt, wobei die zumindest eine Wärmetauschvorrichtung (31) sich in Axialrichtung (X) zumindest teilweise entlang der Brennkammer (13) erstreckt,
**dadurch gekennzeichnet, dass**
eine Wärmedämmung (24) zwischen der Brennkammer (13) und der zumindest einen Wärmetauschvorrichtung (31) angeordnet ist, wobei die Wandstärke der Wärmedämmung (24) mindestens 3 mm beträgt und die Wärmedämmung (24) ein Material mit einer Wärmeleitfähigkeit von weniger als 5 W/(m·K) aufweist.

2. Industriebrenner nach Anspruch 1, **dadurch gekennzeichnet, dass** die Wärmedämmung (24) ein Material mit einer Wärmeleitfähigkeit von weniger als 0,6 W/(m·K) aufweist.

3. Industriebrenner nach einem der vorhergehenden Ansprüche, **dadurch gekennzeichnet, dass** die Wärmedämmung (24) aus vakuumgeformten Keramikfasern besteht.

4. Industriebrenner nach einem der vorhergehenden Ansprüche, **dadurch gekennzeichnet, dass** die zumindest eine Wärmetauschvorrichtung (31) als die Brennkammer (13) radial umgebender Rekuperator (21) ausgebildet ist, wobei ein Abgasführungsrohr (27) den Rekuperator (21) radial umgibt und zwischen dem Abgasführungsrohr (27) und dem Rekuperator (21) ein mit dem Heizraum (12) in Strömungsverbindung stehender Abgaskanal (28) gebildet ist, wobei ferner in Axialrichtung (X) stromauf der Brennkammer (13) ein von dem Rekuperator (21) radial umgebendes Luftführungsrohr (32) angeordnet ist, und wobei zwischen dem Luftführungsrohr (20) und dem Rekuperator (21) ein Brennluft (15) führender Brennluftkanal (19) gebildet ist.

5. Industriebrenner nach einem der vorhergehenden Ansprüche, **dadurch gekennzeichnet, dass** stromauf der Brennkammer (13) am stromabseitigen Ende des Luftführungsrohres (20) eine Strömungsverzweigung (22) vorgesehen ist, die die in dem Brennluftkanal (19) in Richtung der Brennkammer (13) geförderte Brennluft (15) zumindest in einen zu der Brennkammer (13) führenden Primärluftkanal (23) und in einen zwischen dem Rekuperator (21) und der Wärmedämmung (24) ausgebildeten, zu dem Kopf (26) des Rekuperators (21) führenden Sekundärluftkanal (25) leitet.

6. Industriebrenner nach Anspruch 4 oder 5, **dadurch gekennzeichnet, dass** die Wärmedämmung (24) unter Ausbildung eines Radialspalts (29) zu der Brennkammer (13) radial beabstandet angeordnet ist, wobei der Radialspalt (29) mit dem Primärluftkanal (23) und dem Sekundärluftkanal (25) derart in Strömungsverbindung steht, dass zur Kühlung der Wandung der Brennkammer (13) ein Teil der durch den Primärluftkanal (23) strömenden Brennluft (15) durch den Radialspalt (29) zu dem Sekundärluftkanal (25) oder ein Teil der durch den Sekundärluftkanal (25) strömenden Brennluft (15) durch den Radialspalt (29) zu dem Primärluftkanal (23) strömt.

7. Industriebrenner nach Anspruch 5 oder 6, **dadurch gekennzeichnet, dass** das stromauf der Brennkammer (13) bis zur Strömungsverzweigung (22) verlaufende Luftführungsrohr (20) und die Wärmedämmung (24) als ein einziges Bauteil aus einem Material mit einer Wärmeleitfähigkeit von weniger als 5 W/(m·K) und mit einer Wandstärke von mindestens 3 mm ausgeführt sind, welches zur Ausbildung einer
Strömungsverzweigung (22) stromauf der Brennkammer (13) Durchtrittsöffnungen aufweist.

## Claims

1. An industrial burner of a thermal process plant for directly or indirectly heating a furnace space, which has: a combustion chamber (13) having at least one opening (17), which opens into a heating space (12) and through which a substance stream (16) passes out of the combustion chamber (13) into the heating space (12); and at least one heat exchanger device (31), which cools exhaust gas (33) that is conveyed out of the heating space (12) into the heat exchanger device (31) by heat exchange with combustion air (15), the at least one heat exchanger device (31) extending at least partially along the combustion chamber (13) in the axial direction (X),
**characterised in that**
a thermal insulation (24) is arranged between the combustion chamber (13) and the at least one heat exchanger device (31), wherein the wall thickness of the thermal insulation (24) is at least 3 mm and the thermal insulation (24) contains a material with a thermal conductivity of less than 5 W/(m·K).

2. The industrial burner according to Claim 1, **characterised in that** the thermal insulation (24) contains a material with a thermal conductivity of less than 0.6 W/(m·K).

3. The industrial burner according to any one of the preceding claims, **characterised in that** the thermal insulation (24) consists of vacuum-formed ceramic fibres.

4. The industrial burner according to any one of the preceding claims, **characterised in that** the at least one thermal exchanger device (31) is in the form of a recuperator (21) that radially surrounds the combustion chamber (13), wherein an exhaust-gas-conducting pipe (27) radially surrounds the recuperator (21), and an exhaust gas duct (28), which is flow-connected to the heating space (12), is formed between the exhaust-gas-conducting pipe (27) and the recuperator (21), wherein an air-conducting pipe (32), which is radially surrounded by the recuperator (21), is arranged further in the axial direction (X) upstream of the combustion chamber (13), and wherein a combustion air duct (19) that conducts combustion air (15) is formed between the air-conducting pipe (20) and the recuperator (21).

5. The industrial burner according to any one of the preceding claims, **characterised in that** a flow branch (22) is provided upstream of the combustion chamber (13) at the downstream end of the air-conducting pipe (20), said flow branch conducting the combustion air (15), which is conveyed in the combustion air duct (19) in the direction of the combustion chamber (13), at least into a primary air duct (23) that leads to the combustion chamber (13) and into a secondary air duct (25) that is formed between the recuperator (21) and the thermal insulation (24) and leads to the head (26) of the recuperator (21).

6. The industrial burner according to Claim 4 or 5, **characterised in that** the thermal insulation (24) is arranged at a radial distance from the combustion chamber (13), forming a radial gap (29), wherein the radial gap (29) is flow-connected to the primary air duct (23) and to the secondary air duct (25) in such a manner that some of the combustion air (15) flowing through the primary air duct (23) flows through the radial gap (29) to the secondary air duct (25) or some of the combustion air (15) flowing through the secondary air duct (25) flows through the radial gap (29) to the primary air duct (23), in order to cool the wall of the combustion chamber (13).

7. The industrial burner according to Claim 5 or 6, **characterised in that** the air-conducting pipe (20) that runs upstream of the combustion chamber (13) as far as the flow branch (22) and the thermal insulation (24) are formed as a single component that consists of a material with a thermal conductivity of less than 5 W/(m·K), has a wall thickness of at least 3 mm, and has through-openings upstream of the combustion chamber (13) to form a flow branch (22).

## Revendications

1. Brûleur industriel d'une installation de procédé thermique pour le chauffage direct ou indirect d'une cavité de four qui présente une chambre de combustion (13) comprenant au moins une ouverture (17) débouchant dans un foyer (12), à travers laquelle un écoulement de matière (16) parvient de la chambre de combustion (13) au foyer (12), et au moins un dispositif d'échange de chaleur (31) qui refroidit des gaz brûlés (33) transportés du foyer (12) dans le dispositif d'échange de chaleur (31) par échange de chaleur avec de l'air à combustion (15), sachant que l'au moins un dispositif d'échange de chaleur (31) s'étend au moins partiellement le long de la chambre de combustion (13) dans le sens axial (X),
**caractérisé en ce**
**qu'**une isolation thermique (24) est disposée entre la chambre de combustion (13) et l'au moins un dispositif d'échange de chaleur (31), sachant que l'épaisseur de paroi de l'isolation thermique (24) est au moins de 3 mm et l'isolation thermique (24) présente un matériau ayant une conductibilité thermique inférieure à 5 W/ m.K).

2. Brûleur industriel selon la revendication 1, **caractérisé en ce que** l'isolation thermique (24) présente un matériau ayant une conductibilité thermique inférieure à 0,6 W/ (m.K).

3. Brûleur industriel selon l'une des revendications précédentes, **caractérisé en ce que** l'isolation thermique (24) est composée de fibres céramique formées sous vide.

4. Brûleur industriel selon l'une des revendications précédentes, **caractérisé en ce que** l'au moins un dispositif d'échange de chaleur (31) est formé en tant que récupérateur (21) entourant radialement la chambre de combustion (13), sachant qu'un tuyau d'évacuation des gaz (27) entoure radialement le récupérateur (21) et qu'un canal de gaz brûlés (28) en liaison d'écoulement avec le foyer (12) est formé entre le tuyau d'évacuation des gaz (27) et le récupérateur (21), sachant qu'en outre un tuyau guide d'air (32) entouré radialement par le récupérateur (21) est disposé en amont de la chambre de combustion (13) dans le sens axial (X), et sachant qu'un canal d'air à combustion (19) guidant l'air à combustion (15) est formé entre le tuyau guide d'air (20) et le récupérateur (21).

5. Brûleur industriel selon l'une des revendications précédentes, **caractérisé en ce qu'**un branchement d'écoulement (22) est prévu en amont de la chambre de combustion (13) sur l'extrémité éloignée de l'écoulement du tuyau guide d'air (20), qui dirige l'air à combustion (15), transporté dans le canal d'air à combustion (19) en direction de la chambre à combustion (13), au moins dans un canal d'air primaire (23) conduisant à la chambre à combustion (13) et dans un canal d'air secondaire (25) allant en direction de la tête (26) du récupérateur (21), formé entre le récupérateur (21) et l'isolation thermique (24).

6. Brûleur industriel selon la revendication 4 ou 5, **caractérisé en ce que** l'isolation thermique (24) est disposée à distance radiale de la chambre de combustion (13) par formation d'une fente radiale (29), sachant que la fente radiale (29) est ainsi en liaison d'écoulement avec le canal d'air primaire (23) et le canal d'air secondaire (25), que pour refroidir la paroi de la chambre de combustion (13), une partie de l'air à combustion (15) s'écoulant à travers le canal d'air primaire (23) s'écoule à travers la fente radiale (29) en direction du canal d'air secondaire (25) ou une partie de l'air à combustion (15) s'écoulant à travers le canal d'air secondaire (25) s'écoule à travers la fente radiale (29) en direction du canal d'air primaire (23).

7. Brûleur industriel selon la revendication 5 ou 6, **caractérisé en ce que** le tuyau guide d'air (20) s'écoulant en amont de la chambre à combustion (13) jusqu'au branchement d'écoulement (22) et l'isolation thermique (24) sont conçus en tant qu'une seule pièce dans un matériau présentant une conductibilité thermique inférieure à 5 W/(m.K) et une épaisseur de paroi d'au moins 3 mm, qui présente des percées en amont de la chambre de combustion (13) pour former un branchement d'écoulement (22).
